# EUROPÄISCHE PATENTSCHRIFT

(11) **EP 3 715 539 B1**
(45) Veröffentlichungstag und Bekanntmachung des Hinweises auf die Patenterteilung: **13.04.2022**
(21) Anmeldenummer: 20153225.6
(22) Anmeldetag: 22.01.2020
(51) Int. Cl.: E03C 1/04, F16K 11/044, F16K 31/385

(54) **MEHRWEGEVENTIL MIT EINER MEHRZAHL VON GEKOPPELTEN MEMBRANVENTILEN**
MULTIWAY VALVE WITH A PLURALITY OF COUPLED MEMBRANE VALVES
SOUPAPE À PLUSIEURS VOIES DOTÉE D'UNE PLURALITÉ DE SOUPAPES À MEMBRANE COUPLÉES

(30) Priorität: 13.02.2019 DE 102019103601
(43) Veröffentlichungstag der Anmeldung: 30.09.2020
(73) Patentinhaber: Grohe AG, 58653 Hemer (DE)
(72) Erfinder: MAY, Sascha, 44879 Bochum (DE); MAINKA, David, 58640 Iserlohn (DE); RÖDIGER, Sascha, 58239 Schwerte (DE); SCHRÖDER, Claudia, 58642 Iserlohn (DE); HEUBROCK, Dominik, 59387 Ascheberg (DE); FLÜGGE, Simon, 44263 Dortmund (DE)

(56) Entgegenhaltungen:
- DE-U1-202016 003 311
- JP-A- H0 369 869
- JP-A- S57 110 876
- JP-U- S4 950 684
- US-A- 3 099 290

## Beschreibung

Die vorliegende Erfindung betrifft ein Mehrwegeventil für eine Sanitärarmatur. Solche Sanitärarmaturen dienen der bedarfsgerechten Bereitstellung einer Flüssigkeit zum Beispiel an Duschen, Badewannen, Spülbecken oder Waschbecken.

Bekannte sind Mehrwegeventile mit einem Flüssigkeitszulauf und einer Mehrzahl von Flüssigkeitsabläufen, mit denen eine Flüssigkeit wahlweise einem bestimmten Flüssigkeitsauslauf der Sanitärarmatur zuführbar ist. Beispielsweise kann ein Wannenauslauf einer Badewanne mit einem ersten Flüssigkeitsablauf des Mehrwegeventils und eine Handbrause mit einem zweiten Flüssigkeitsablauf des Mehrwegeventils verbunden sein. Die Umstellung zwischen den einzelnen Flüssigkeitsabläufen des Mehrwegeventils bzw. zwischen den einzelnen Flüssigkeitsausläufen der Sanitärarmatur erfolgt bei den bekannten Mehrwegeventilen durch schwergängige Zug-/Druckventile, deren Betätigungskräfte zudem vom Flüssigkeitsdruck der in den Flüssigkeitszulauf einströmenden Flüssigkeit abhängig sind. DE202016003311U1 offenbart ein Mehrwegeventil gemäß dem Oberbegriff des Anspruchs 1.

Aufgabe der Erfindung ist es daher, die mit Bezug auf den Stand der Technik geschilderten Probleme zumindest teilweise zu lösen und insbesondere ein Mehrwegeventil anzugeben, das mit geringen Betätigungskräften und unabhängig vom Flüssigkeitsdruck der zuströmenden Flüssigkeit betätigbar ist.

Diese Aufgaben werden gelöst mit einem Mehrwegeventil gemäß den Merkmalen des unabhängigen Patentanspruchs. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Mehrwegeventil für eine Sanitärarmatur bei, die zumindest die folgenden Komponenten aufweist:
- ein Gehäuse mit zumindest einem Zulauf, zumindest einem ersten Ablauf und zumindest einem zweiten Ablauf;
- zumindest ein erstes Membranventil zum Steuern (Öffnen und Schließen) des zumindest einen ersten Ablaufs, wobei das zumindest eine erste Membranventil eine erste Membran und eine mit dem zumindest einen Zulauf verbundene erste Gegendruckkammer aufweist;
- zumindest ein zweites Membranventil zum Steuern (Öffnen und Schließen) des zumindest einen zweiten Ablaufs, wobei das zumindest eine zweite Membranventil eine zweite Membran und eine mit dem zumindest einen Zulauf verbundene zweite Gegendruckkammer aufweist;
- eine Steuerung zum Steuern (Betätigen) des zumindest einen ersten Membranventils und des zumindest einen zweiten Membranventils, wobei die Steuerung zumindest einen ersten Steuerkanal mit einem ersten Steuerventil und zumindest einen zweiten Steuerkanal mit einem zweiten Steuerventil aufweist und wobei der zumindest eine erste Steuerkanal die erste Gegendruckkammer des zumindest einen ersten Membranventils unter Umgehung der ersten Membran mit dem zumindest einen ersten Ablauf und der zumindest eine zweite Steuerkanal die zweite Gegendruckkammer des zumindest einen zweiten Membranventils unter Umgehung der zweiten Membran mit dem zumindest einen zweiten Ablauf verbindet; und
- eine Kopplung zum Koppeln der ersten Membran mit der zweiten Membran, sodass eine Schließbewegung der ersten Membran eine Öffnungsbewegung der zweiten Membran bewirkt.

Das Mehrwegeventil ist beispielsweise über Schlauchleitungen und/oder Rohrleitungen mit einer Sanitärarmatur verbindbar. Sanitärarmaturen dienen der bedarfsgerechten Bereitstellung einer Flüssigkeit, insbesondere Wasser, an beispielsweise Duschen, Badewannen, Spülbecken oder Waschbecken. Das Mehrwegeventil kann insbesondere zumindest teilweise unter Putz bzw. zumindest teilweise in einer Wand oder einem Träger angeordnet sein.

Das Mehrwegeventil umfasst ein Gehäuse mit zumindest einem Zulauf, über den das Mehrwegeventil an eine Flüssigkeitsquelle, zum Beispiel ein öffentliches Flüssigkeitsversorgungsnetz, anschließbar ist. Dem zumindest einen Zulauf kann ein Mischventil oder eine Mischkartusche vorgeschaltet sein, mit dem ein Kaltwasser mit einer Kaltwassertemperatur und ein Warmwasser mit einer Warmwassertemperatur zu einem Mischwasser mit einer gewünschten Mischwassertemperatur mischbar ist. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Gehäuse kann zumindest teilweise aus Kunststoff und/oder Metall, wie zum Beispiel Messing, bestehen. Das Gehäuse weist zudem zumindest einen ersten Ablauf und zumindest einen zweiten Ablauf für die Flüssigkeit auf. Der zumindest eine erste Ablauf und der zumindest eine zweite Ablauf sind insbesondere über Schlauchleitungen und/oder Rohrleitungen mit verschiedenen Flüssigkeitsausläufen, beispielsweise einem Wannenauslauf oder einer Handbrause, verbindbar.

Die über den zumindest einen Zulauf zuströmende Flüssigkeit ist durch das Gehäuse zumindest einem ersten Membranventil und zumindest einem zweiten Membranventil zuführbar. Hierzu können in dem Gehäuse Zulaufkanäle und/oder Zulaufkammern ausgebildet sein. Durch das zumindest eine erste Membranventil ist der zumindest eine erste Ablauf des Mehrwegeventils und durch das zumindest eine zweite Membranventil der zumindest eine zweite Ablauf des Mehrwegeventils steuerbar. Dies bedeutet insbesondere, dass durch das zumindest eine erste Membranventil der zumindest eine erste Ablauf und durch das zumindest eine zweite Membranventil der zumindest eine zweite Ablauf (vollständig) verschließbar oder öffenbar ist. Somit ist durch Öffnen des zumindest einen ersten Membranventils zumindest ein erster Flüssigkeitsauslauf und/oder durch Öffnen des zumindest einen zweiten Membranventils zumindest ein zweiter Flüssigkeitsauslauf aktivierbar. Das zumindest eine erste Membranventil umfasst eine erste Membran und eine mit dem zumindest einen Zulauf verbundene erste Gegendruckkammer und das zumindest eine zweite Membranventil eine zweite Membran und eine mit dem zumindest einen Zulauf verbundene zweite Gegendruckkammer.

Das zumindest eine erste Membranventil und das zumindest eine zweite Membranventil sind durch eine (gemeinsame und/oder einzige) Steuerung steuerbar. Die Steuerung umfasst zumindest einen ersten Steuerkanal mit einem ersten Steuerventil und zumindest einen zweiten Steuerkanal mit einem zweiten Steuerventil. Der zumindest eine erste Steuerkanal verbindet die erste Gegendruckkammer des zumindest einen ersten Membranventils unter Umgehung der ersten Membran mit dem zumindest einen ersten Ablauf und der zumindest eine zweite Steuerkanal die zweite Gegendruckkammer des zumindest einen zweiten Membranventils unter Umgehung der zweiten Membran mit dem zumindest einen zweiten Ablauf.

Die Flüssigkeit kann aus den Zulaufkanälen und/oder Zulaufkammern des Gehäuses über eine Ausgleichsbohrung in den Membranen der Membranventile und/oder sonstigen Komponenten des Brausekopfs in die Gegendruckkammer der Membranventile fließen, sodass die Flüssigkeit auf beiden Seiten der Membranen den gleichen Flüssigkeitsdruck aufweist. Da die Membranen die Gegendruckkammern mit einer größeren Fläche begrenzen als die Zulaufkanäle und/oder Zulaufkammern der Flüssigkeitsführung, ist die aus dem Flüssigkeitsdruck der Flüssigkeit in den Gegendruckkammern resultierende Kraft auf die Membranen größer als die aus dem Flüssigkeitsdruck der Flüssigkeit in den Zulaufkanälen und/oder Zulaufkammern resultierende Kraft. Hierdurch werden die Membranen auf einen Ventilsitz gedrückt, sodass die Membranventile geschlossen sind. Von den Gegendruckkammern führt (jeweils) ein Steuerkanal zu einem der Steuerventile. Bei den Steuerventilen kann es sich beispielsweise um elektrisch betätigbare Ventile, Magnetventile oder manuell betätigbare Ventile handeln. Die Steuerventile können in dem Mehrwegeventil oder außerhalb des Mehrwegeventils, beispielsweise in einer Wand, angeordnet sein. Befinden sich die Steuerventile außerhalb des Mehrwegeventils, können die Steuerkanäle zumindest teilweise als (flexible) Schlauchleitungen ausgebildet sein. Durch Öffnen der Steuerventile kann die Flüssigkeit über die Steuerkanäle aus den Gegendruckkammern abfließen, sodass der Flüssigkeitsdruck in den Gegendruckkammern sinkt. Hierdurch werden die Membrane von dem Membransitz abgehoben, sodass sich die Membranventile öffnen. Damit das Membranventil öffnet, muss der Flüssigkeitsdruck in der Gegendruckkammer durch den stationären Zustand, der sich zwischen der über die Ausgleichsöffnung nachfließenden Flüssigkeit und der über die Steuerkanäle aus der Gegendruckkammer abfließenden Flüssigkeit einstellt, stark genug abfallen. Hierzu können die Steuerkanäle größer bzw. mit einem größeren Durchmesser ausgeführt sein als die Ausgleichsbohrungen.

Das Mehrwegeventil umfasst zudem eine Kopplung zum Koppeln der zumindest einen ersten Membran des zumindest einen ersten Membranventils mit der zumindest einen zweiten Membran des zumindest einen zweiten Membranventils, sodass eine Schließbewegung der zumindest einen ersten Membran eine Öffnungsbewegung der zumindest einen zweiten Membran bewirkt. Dies bedeutet insbesondere, dass die erste Membran mit der zweiten Membran derart mechanisch verbunden ist, dass eine Schließ- oder Öffnungsbewegung der ersten Membran eine entsprechende Gegenbewegung der zweiten Membran bewirkt. Hierdurch kann sichergestellt werden, dass entweder das zumindest eine erste Membranventil oder das zumindest eine zweite Membranventil (vollständig) geöffnet oder geschlossen ist. Bei der Kopplung handelt es sich insbesondere um ein mechanisches Element, dass die erste Membran und die zweite Membran verbindet und/oder das mit der ersten Membran und der zweiten Membran bewegbar ist. Die Kopplung kann mit einem (ggf. einstückigen) separaten Bauteil gebildet sein, das mit beiden Membranen (unmittelbar) zusammenwirkt und insbesondere stiftförmig oder stabförmig ausgebildet sein.

Durch die Verwendung der Membranventile ist das Mehrwegeventil mit geringen Betätigungskräften und unabhängig vom Flüssigkeitsdruck der zuströmenden Flüssigkeit betätigbar.

Das Mehrwegeventil kann eine Feder aufweisen, durch deren Federkraft das zumindest eine zweite Membranventil schließbar ist. Wenn dem Mehrwegeventil keine Flüssigkeit zufließt, weil beispielsweise ein vorgeschaltetes Absperrventil geschlossen ist und das Mehrwegeventil somit (im Wesentlichen) drucklos ist, kann das Problem bestehen, dass sowohl das zumindest eine erste Membranventil als auch das zumindest eine zweite Membranventil nicht vollständig geschlossen sind. Beim Öffnen des Absperrventils kann daher zunächst Flüssigkeit sowohl über den zumindest einen ersten Ablauf als auch über den zumindest einen zweiten Ablauf abfließen. Gewünscht ist jedoch häufig, dass beim Öffnen des Absperrventils immer der gleiche Ablauf oder die gleichen Abläufe geöffnet sind. Beispielsweise soll standardmäßig häufig zuerst der Wannenauslauf aktiviert sein, wobei aus der Handbrause keine Flüssigkeit kommen soll. Mit der Feder kann insbesondere eine Rückstellfunktion des Mehrwegeventils realisiert werden, durch die das Mehrwegeventil in einen definierten Ausgangszustand rückstellbar ist, wenn keine Flüssigkeit über den zumindest einen Zulauf zuströmt, d. h. das Mehrwegeventil insbesondere (im Wesentlichen) drucklos ist. Hierzu wird die zweite Membran des zumindest einen zweiten Membranventils (zusätzlich) mit der Federkraft der Feder verschlossen, insbesondere wenn dem Mehrwegeventil keine Flüssigkeit zufließt. Die Federkraft der Feder ist daher insbesondere in Richtung einer Schließstellung der zweiten Membran gerichtet. Weiterhin kann die Federkraft der Feder die zweite Membran in Richtung eines Ventilsitzes drücken. Die Federkraft wirkt einer Öffnungsbewegung der zweiten Membran entgegen, was sich ungünstig auf ein Öffnungsverhalten des zumindest einen zweiten Membranventils auswirken kann. Dies wird jedoch durch die Kopplung der ersten Membran mit der zweiten Membran verhindert, weil eine Schließkraft der ersten Membran über die Kopplung der Federkraft der Feder zumindest teilweise entgegenwirkt. Mit anderen Worten können die öffnenden und schließenden Membranen als Gegenspieler mechanisch durch die Kopplung so gekoppelt sein, dass die jeweilige Schließkraft und die Öffnungskraft zusammenwirken und die Federkraft überwinden. Durch die Feder wird somit eine sofort wirkende Rückstellfunktion realisiert und sichergestellt, dass entweder das zumindest eine erste Membranventil oder das zumindest eine zweite Membranventil (vollständig) geöffnet ist. Das Mehrwegeventil ist dadurch eigensicher.

Das zumindest eine erste Membranventil kann durch die Federkraft der Feder öffenbar sein. Hierzu ist die Federkraft insbesondere über die Kopplung auf die erste Membran des zumindest einen ersten Membranventils übertragbar.

Die Feder kann an der Kopplung gelagert sein. Die Feder kann insbesondere nach Art einer Schraubenfeder ausgebildet sein. Die Kopplung kann insbesondere durch die Feder verlaufen.

Die Kopplung kann sich (im wesentlichen nur) im Bereich der ersten und zweiten Gegenstromkammer befinden. Es ist weiter möglich, dass sich die Feder nur in einer der beiden Gegenstromkammern befindet.

Das zumindest eine erste Membranventil und das zumindest eine zweite Membranventil können spiegelsymmetrisch zueinander angeordnet sein.

Die Kopplung kann in dem Gehäuse (axial, d.h. insbesondere nur in eine Richtung hin und her) bewegbar gelagert sein. Dies bedeutet insbesondere, dass die Kopplung durch das Gehäuse bewegbar geführt ist. Die Kopplung ist in dem Gehäuse insbesondere entlang ihrer Längsachse bewegbar, wenn dieses eine stift- oder stabähnliche Form aufweist.

Die Kopplung kann in einer Trennwand (des Gehäuses) zwischen dem zumindest einen ersten Membranventil und dem zumindest einen zweiten Membranventil bewegbar gelagert sein.

Entweder kann das erste Steuerventil oder das zweite Steuerventil geöffnet sein. Insbesondere können das erste Steuerventil und das zweite Steuerventil (mechanisch oder elektrisch) derart gekoppelt sein, dass (ausschließlich bzw. jederzeit nur) entweder das erste Steuerventil oder das zweite Steuerventil geöffnet ist.

Die Steuerung kann ein bewegbares Steuerelement umfassen, mit dem das erste Steuerventil und das zweite Steuerventil gemeinsam betätigbar sind. Bei dem bewegbaren Steuerelement kann es sich beispielsweise um eine Steuerscheibe handeln. Das bewegbare Steuerelement kann insbesondere durch einen Benutzer des Mehrwegeventils verstellbar sein.

Das Steuerelement kann bewegbar an dem Gehäuse befestigt sein. Insbesondere kann das Steuerelement rotierbar, verschiebbar und/oder drückbar an dem Gehäuse befestigt sein.

Die Erfindung sowie das technische Umfeld werden nachfolgend anhand der Figur näher erläutert. Es ist darauf hinzuweisen, dass die Figur eine besonders bevorzugte Ausführungsvariante der Erfindung zeigt, diese jedoch nicht darauf beschränkt ist. Es zeigt beispielhaft und schematisch:

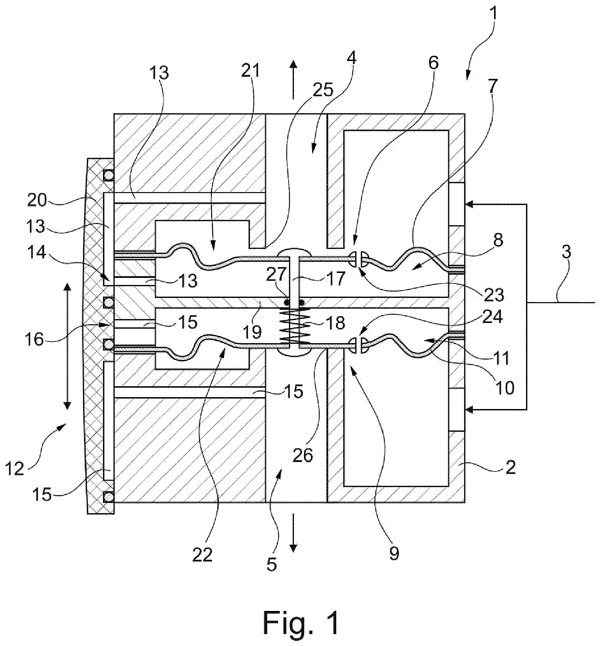

- Fig. 1:: ein Mehrwegeventil in einer Schnittdarstellung.

Die Fig. 1 zeigt ein Mehrwegeventil 1 in einer Schnittdarstellung. Das Mehrwegeventil 1 weist ein Gehäuse 2 mit einem Zulauf 3 auf, über den dem Mehrwegeventil 1 eine Flüssigkeit zuführbar ist. In dem Gehäuse 1 ist ein erstes Membranventil 6 mit einer ersten Membran 7 und ein zweites Membranventil 9 mit einer zweiten Membran 10 angeordnet. Die Flüssigkeit strömt von dem Zulauf 3 in eine ringförmige erste Zulaufkammer 21 und eine ringförmige zweite Zulaufkammer 22. Die ringförmige erste Zulaufkammer 21 leitet die Flüssigkeit zu dem ersten Membranventil 6 und die ringförmige zweite Zulaufkammer 22 zu dem zweiten Membranventil 9. Die Flüssigkeit strömt von der ersten Zulaufkammer 21 durch eine erste Ausgleichsbohrung 23 in der ersten Membran 7 in eine erste Gegendruckkammer 8 und von der zweiten Zulaufkammer 22 durch eine zweite Ausgleichsbohrung 24 in der zweiten Membran 10 in eine zweite Gegendruckkammer 11. Die erste Gegendruckkammer 8 befindet sich auf einer der ersten Zulaufkammer 21 gegenüberliegenden Seite der ersten Membran 7 und die zweite Gegendrucckammer 24 auf einer der zweiten Zulaufkammer 22 gegenüberliegenden Seite der zweiten Membran 10. Die erste Membran 7 und die zweite Membran 10 sind über eine Kopplung 17 miteinander gekoppelt. Die Kopplung 17 ist hier stabförmig ausgebildet und an einem ersten längsseitigen Ende an der ersten Membran 7 und an einem zweiten längsseitigen Ende an der zweiten Membran 10 befestigt. Weiterhin ist die Kopplung 17 entlang ihrer Längsachse durch eine Trennwand 19 zwischen dem ersten Membranventil 6 und dem zweiten Membranventil 9 bewegbar gelagert. Somit sind eine Bewegung bzw. Bewegungskräfte zwischen der ersten Membran 7 und der zweiten Membran 8 übertragbar. Die hierzu in der Trennwand 19 ausgebildete Öffnung für die Kopplung 17 ist mit einer Dichtung 27 abgedichtet, sodass über die Öffnung keine Flüssigkeit zwischen den Gegendruckkammern 8, 9 fließen kann.

Das Mehrwegeventil 1 ist in der Fig. 1 in einem Ausgangszustand bzw. einem Zustand nach einer Rückstellung gezeigt. Zur Erreichung des Ausgangszustands nach einer Deaktivierung der Flüssigkeitszufuhr über den Zulauf 3 weist das Mehrwegeventil 1 eine Feder 18 auf, die an der Kopplung 17 gelagert ist und sich an der Trennwand 19 und der zweiten Membran 10 abstützt. Die Feder 18 ist hier nach Art einer Druckfeder ausgebildet und drückt die zweite Membran 10 in Richtung der hier gezeigten geschlossenen Stellung der zweiten Membran 10 und die erste Membran 7 über die Kopplung 17 in Richtung der hier gezeigten geöffneten Stellung der ersten Membran 7. In der geöffneten Stellung der ersten Membran 7 ist die erste Membran 7 von einem ringförmigen ersten Ventilsitz 25 abgehoben, sodass ein erster Ablauf 4 des Mehrwegeventils 1 geöffnet ist. Der erste Ventilsitz 25 ist an einem längsseitigen Ende des ersten Ablaufs 4 ausgebildet. Im geöffneten Zustand der ersten Membran 7 kann die Flüssigkeit von der ersten Zulaufkammer 21 über den ersten Ventilsitz 25 direkt in den ersten Ablauf 5 fließen. In der geschlossenen Stellung der zweiten Membran 10 liegt die zweite Membran 10 an einem ringförmigen zweiten Ventilsitz 26 an, sodass ein zweiter Ablauf 5 des Mehrwegeventils 1 geschlossen ist. Der zweite Ventilsitz 26 ist an einem längsseitigen Ende des zweiten Ablaufs 5 ausgebildet.

Durch die Feder 18 bleibt die Stellung der ersten Membran 7 und der zweiten Membran 10 bei Aktivierung der Flüssigkeitszufuhr über den Zulauf 3 stabil, sodass der erste Ablauf 4 (vollständig) geöffnet und der zweite Ablauf 5 (vollständig) geschlossen bleibt. Im geschlossenen Zustand der zweiten Membran 10 herrscht nach der Aktivierung der Flüssigkeitszufuhr über den Zulauf 3 in der zweiten Zulaufkammer 22 und der zweiten Gegendruckkammer 11 der gleiche Flüssigkeitsdruck. Da die zweite Membran 10 die zweite Gegendruckkammer 11 mit einer größeren Fläche begrenzt als die zweite Zulaufkammer 22, ist die aus dem Flüssigkeitsdruck der Flüssigkeit in der zweiten Gegendruckkammer 11 resultierende Kraft auf die zweite Membran 10 größer als die aus dem Flüssigkeitsdruck der Flüssigkeit in der zweiten Zulaufkammer 22 resultierende Kraft. Hierdurch wird die zweite Membran 10 auf den ringförmigen zweiten Ventilsitz 26 gedrückt.

Das erste Membranventil 6 und das zweite Membranventil 9 sind durch eine gemeinsame Steuerung 12 steuerbar. Die Steuerung 12 umfasst einen ersten Steuerkanal 13 mit einem ersten Steuerventil 14 und einen zweiten Steuerkanal 15 mit einem zweiten Steuerventil 16. Der erste Steuerkanal 13 verbindet die erste Gegendruckkammer 8 unter Umgehung der ersten Membran 7 mit dem ersten Ablauf 4 und der zweite Steuerkanal 15 die zweite Gegendrucckammer 11 unter Umgehung der zweiten Membran 10 mit dem zweiten Ablauf 5. Das erste Steuerventil 14 und das zweite Steuerventil 16 werden hier durch ein Steuerelement 20 gebildet, dass an dem Gehäuse 2 verstellbar gelagert ist. In der hier gezeigten Stellung des Steuerelements 20 ist das erste Steuerventil 14 geöffnet und das zweite Steuerventil 16 geschlossen. Beim Verstellen des Steuerelements 20 (hier nach oben) wird das erste Steuerventil 14 geschlossen und das zweite Steuerventil 16 geöffnet. Durch das Öffnen des zweiten Steuerventils 16 kann Flüssigkeit von der zweiten Gegendruckkammer 11 über den zweiten Steuerkanal 16 in den zweiten Ablauf 5 abfließen, sodass der Druck der Flüssigkeit in der zweiten Gegendrucckammer 11 sinkt. Gleichzeitig steigt der Druck der Flüssigkeit in der ersten Gegendruckkammer 8 durch das Schließen des zweiten Steuerventils 16 an, weil keine Flüssigkeit mehr von der ersten Gegendruckkammer 8 über den ersten Steuerkanal 13 in den ersten Ablauf 4 ablaufen kann. Durch die geänderten Druckverhältnisse in der ersten Gegendruckkammer 8 und der zweiten Gegendruckkammer 11 erzeugen die erste Membran 7 und die zweite Membran 10 gemeinsam eine der Federkraft der Feder 18 entgegenwirkende Kraft, sodass die erste Membran 7 auf den ersten Ventilsitz 25 gedrückt und die zweite Membran 10 von dem zweiten Ventilsitz 26 abgehoben wird. Durch die doppelte Kraftwirkung der ersten Membran 7 und der zweiten Membran 10 über die Kopplung 17 kann die Umstellung des Mehrwegeventils 1 auch gegen die Federkraft der Feder 18 erfolgen, wofür die Kraft einer einzelnen Membran 7, 10 nicht ausreichen würde. Über die Steuerung 12 ist wahlweise der erste Ablauf 4 oder der zweite Ablauf 5 aktivierbar. Bei einer Deaktivierung der Flüssigkeitszufuhr über den Zulauf 3 wird das Mehrwegeventil 1 bzw. die erste Membran 7 des ersten Membranventils 6 und die zweite Membran 10 des zweiten Membranventils 9 unabhängig von der Stellung des Steuerelements 20 durch die Feder 18 und die Kopplung 17 wieder in die Ausgangsstellung zurückgestellt. Das erste Membranventil 6 und das zweite Membranventil 9 sind bei der hier gezeigten Ausführungsvariante identisch und spiegelsymmetrisch zueinander ausgebildet. Die Beschreibung des ersten Membranventils und des zweiten Membranventils kann daher auf das jeweilige andere Membranventil bezogen werden.

Durch die vorliegende Erfindung ist ein Mehrwegeventil mit geringen Betätigungskräften und unabhängig vom Flüssigkeitsdruck der zuströmenden Flüssigkeit betätigbar.

### Bezugszeichenliste

- 1: Mehrwegeventil
- 2: Gehäuse
- 3: Zulauf
- 4: erster Ablauf
- 5: zweite Ablauf
- 6: erstes Membranventil
- 7: erste Membran
- 8: erste Gegendruckkammer
- 9: zweites Membranventil
- 10: zweite Membran
- 11: zweite Gegendruckkammer
- 12: Steuerung
- 13: erster Steuerkanal
- 14: erstes Steuerventil
- 15: zweiter Steuerkanal
- 16: zweites Steuerventil
- 17: Kopplung
- 18: Feder
- 19: Trennwand
- 20: Steuerelement
- 21: erste Zulaufkammer
- 22: zweite Zulaufkammer
- 23: erster Ausgleichsbohrung
- 24: zweiter Ausgleichsbohrung
- 25: erster Ventilsitz
- 26: zweiter Ventilsitz
- 27: Dichtung

## Patentansprüche

1. Mehrwegeventil (1) für eine Sanitärarmatur, zumindest aufweisend:
- ein Gehäuse (2) mit zumindest einem Zulauf (3), zumindest einem ersten Ablauf (4) und zumindest einem zweiten Ablauf (5);
- zumindest ein erstes Membranventil (6) zum Steuern des zumindest einen ersten Ablaufs (4), wobei das zumindest eine erste Membranventil (6) eine erste Membran (7) und eine mit dem zumindest einen Zulauf (3) verbundene erste Gegendruckkammer (8) aufweist;
- zumindest ein zweites Membranventil (9) zum Steuern des zumindest einen zweiten Ablaufs (5), wobei das zumindest eine zweite Membranventil (9) eine zweite Membran (10) und eine mit dem zumindest einen Zulauf (3) verbundene zweite Gegendrucckammer (11) aufweist;
- eine Steuerung (12) zum Steuern des zumindest einen ersten Membranventils (6) und des zumindest einen zweiten Membranventils (9), wobei die Steuerung (12) zumindest einen ersten Steuerkanal (13) mit einem ersten Steuerventil (14) und zumindest einen zweiten Steuerkanal (15) mit einem zweiten Steuerventil (16) aufweist und wobei der zumindest eine erste Steuerkanal (13) die erste Gegendruckkammer (8) des zumindest einen ersten Membranventils (6) unter Umgehung der ersten Membran (7) mit dem zumindest einen ersten Ablauf (4) und der zumindest eine zweite Steuerkanal (15) die zweite Gegendruckkammer (11) des zumindest einen zweiten Membranventils (9) unter Umgehung der zweiten Membran (10) mit dem zumindest einen zweiten Ablauf (5) verbindet; **dadurch gekennzeichnet, dass** das Mehrwegeventil (1) eine Kopplung (17) zum Koppeln der ersten Membran (7) mit der zweiten Membran (10) aufweist, sodass eine Schließbewegung der ersten Membran (7) eine Öffnungsbewegung der zweiten Membran (10) bewirkt.

2. Mehrwegeventil (1) nach Patentanspruch 1, aufweisend eine Feder (18), durch deren Federkraft das zumindest eine zweite Membranventil (9) schließbar ist.

3. Mehrwegeventil (2) nach Patentanspruch 2, wobei das zumindest eine erste Membranventil (6) durch die Federkraft der Feder (18) öffenbar ist.

4. Mehrwegeventil (1) nach Patentanspruch 2 oder 3, wobei die Feder (18) an der Kopplung (17) gelagert ist.

5. Mehrwegeventil (1) nach einem der vorhergehenden Patentansprüche, wobei das zumindest eine erste Membranventil (6) und das zumindest eine zweite Membranventil (9) spiegelsymmetrisch zueinander angeordnet sind.

6. Mehrwegeventil (1) nach einem der vorhergehenden Patentansprüche, wobei die Kopplung (17) in dem Gehäuse (2) bewegbar gelagert ist.

7. Mehrwegeventil (1) nach einem der vorhergehenden Patentansprüche, wobei die Kopplung (17) in einer Trennwand (19) zwischen dem zumindest einen ersten Membranventil (6) und dem zumindest einen zweiten Membranventil (9) bewegbar gelagert ist.

8. Mehrwegeventil (1) nach einem der vorhergehenden Patentansprüche, wobei entweder das erste Steuerventil (14) oder das zweite Steuerventil (16) geöffnet ist.

9. Mehrwegeventil (1) nach einem der vorhergehenden Patentansprüche, wobei die Steuerung (12) ein bewegbares Steuerelement (20) umfasst, mit dem das erste Steuerventil (14) und das zweite Steuerventil (16) gemeinsam betätigbar sind.

10. Mehrwegeventil (1) nach Patentanspruch 9, wobei das Steuerelement (20) bewegbar an dem Gehäuse (2) befestigt ist.

## Claims

1. A multiway valve (1) for a sanitary fitting, comprising at least:
- a housing (2) with at least one inlet (3), at least one first outlet (4) and at least one second outlet (5);
- at least one first membrane valve (6) for controlling the at least one first outlet (4), wherein the at least one first membrane valve (6) comprises a first membrane (7) and a first counterpressure chamber (8) connected to the at least one inlet (3); and
- at least one second membrane valve (9) for controlling the at least one second outlet (5), wherein the at least one second membrane valve (9) has a second membrane (10) and a second counterpressure chamber (11) connected to the at least one inlet (3);
- a control (12) for controlling the at least one first membrane valve (6) and the at least one second membrane valve (9), wherein the control (12) has at least one first control channel (13) with a first control valve (14) and at least one second control channel (15) with a second control valve (16), and wherein the at least one first control channel (13), by bypassing the first membrane (7), connects the first counterpressure chamber (8) of the at least one first membrane valve (6) to the at least one first outlet (4), and the at least one second control channel (15), by bypassing the second membrane (10), connects the second counterpressure chamber (11) of the at least one second membrane valve (9) to the at least one second outlet (5); **characterized in that** the multiway valve (1) comprises a coupling (17) for coupling the first membrane (7) to the second membrane (10) such that a closing movement of the first membrane (7) effects an opening movement of the second membrane (10).

2. The multiway valve (1) according to claim 1, comprising a spring (18), by means of the spring force of which the at least one second membrane valve (9) can be closed.

3. The multiway valve (1) according to claim 2, wherein the at least one first membrane valve (6) can be opened by the spring force of the spring (18).

4. The multiway valve (1) according to claim 2 or 3, wherein the spring (18) is mounted on the coupling (17) .

5. The multiway valve (1) according to any one of the preceding claims, wherein the at least one first membrane valve (6) and the at least one second membrane valve (9) are arranged mirror-symmetrically to one another.

6. The multiway valve (1) according to any one of the preceding claims, wherein the coupling (17) is movably mounted in the housing (2).

7. The multiway valve (1) according to any one of the preceding claims, wherein the coupling (17) is movably mounted in a partition wall (19) between the at least one first membrane valve (6) and the at least one second membrane valve (9).

8. The multiway valve (1) according to any one of the preceding claims, wherein either the first control valve (14) or the second control valve (16) is open.

9. The multiway valve (1) according to any one of the preceding claims, wherein the control (12) comprises a movable control element (20) with which the first control valve (14) and the second control valve (16) can be actuated jointly.

10. The multiway valve (1) according to claim 9, wherein the control element (20) is movably secured to the housing (2).

## Revendications

1. Soupape multivoies (1) destinée à une robinetterie sanitaire, comportant au moins :
- un corps (2), doté d'au moins une arrivée (3), d'au moins un premier écoulement (4) et d'au moins un deuxième écoulement (5) ;
- au moins une première soupape à membrane (6), destinée à commander l'au moins un premier écoulement (4), l'au moins une première soupape à membrane (6) comportant une première membrane (7) et une première chambre de contre-pression (8) reliée avec l'au moins une arrivée (3) ;
- au moins une deuxième soupape à membrane (9), destinée à commander l'au moins un deuxième écoulement (5), l'au moins une deuxième soupape à membrane (9) comportant une deuxième membrane (10) et une deuxième chambre de contre-pression (11) reliée avec l'au moins une arrivée (3) ;
- un système de commande (12), destiné à commander l'au moins une première soupape à membrane (6) et l'au moins une deuxième soupape à membrane (9), le système de commande (12) comportant au moins un premier canal de commande (13), pourvu d'une première soupape de régulation (14) et au moins un deuxième canal de commande (15), pourvu d'une deuxième soupape de régulation (16) et l'au moins un premier canal de commande (13) reliant la première chambre de contre-pression (8) de l'au moins une première soupape à membrane (6) en contournant la première membrane (7) avec l'au moins un premier écoulement (4) et l'au moins un deuxième canal de commande (15) reliant la chambre de contre-pression (11) de l'au moins une deuxième soupape à membrane (9) en contournant la deuxième membrane (10) avec l'au moins un deuxième écoulement (5), **caractérisée en ce que** la soupape multivoies (1) comporte un couplage (17), destiné à coupler la première membrane (7) avec la deuxième membrane (10), de sorte qu'un déplacement en fermeture de la première membrane (7) provoque un déplacement en ouverture de la deuxième membrane (10).

2. Soupape multivoies (1) selon la revendication 1 du brevet, comportant un ressort (18), par la force de ressort duquel l'au moins une deuxième soupape à membrane (9) peut se fermer.

3. Soupape multivoies (2) selon la revendication 2 du brevet, l'au moins une première soupape à membrane (6) pouvant s'ouvrir sous l'effet de la force de ressort du ressort (18).

4. Soupape multivoies (1) selon la revendication 2 ou 3 du brevet, le ressort (18) étant logé sur le couplage (17).

5. Soupape multivoies (1) selon l'une quelconque des revendications précédentes du brevet, l'au moins une première soupape à membrane (6) et l'au moins une deuxième soupape à membrane (9) étant placées en symétrie spéculaire l'une par rapport à l'autre.

6. Soupape multivoies (1) selon l'une quelconque des revendications précédentes du brevet, le couplage (17) étant logé de manière mobile dans le corps (2) .

7. Soupape multivoies (1) selon l'une quelconque des revendications précédentes du brevet, le couplage (17) étant logé dans une paroi de séparation (19) entre l'au moins une première soupape à membrane (6) et l'au moins une deuxième soupape à membrane (9) .

8. Soupape multivoies (1) selon l'une quelconque des revendications précédentes du brevet, soit la première soupape de régulation (14) ou la deuxième soupape de régulation (16) étant ouverte.

9. Soupape multivoies (1) selon l'une quelconque des revendications précédentes du brevet, le système de commande (12) comprenant un élément de commande (20) mobile, à l'aide duquel la première soupape de régulation (14) et la deuxième soupape de régulation (16) sont actionnables conjointement.

10. Soupape multivoies (1) selon la revendication 9 du brevet, l'élément de commande (20) étant fixé de manière mobile sur le corps (2).
